(19) Europäisches Patentamt
European Patent Office
Office européen des brevets

(11) **EP 2 998 368 B1**

(12) **EUROPEAN PATENT SPECIFICATION**

(45) Date of publication and mention of the grant of the patent:
**02.09.2020 Bulletin 2020/36**

(51) Int Cl.:
*A01N 59/20* (2006.01)   *A01N 25/04* (2006.01)
*A01N 25/10* (2006.01)   *A01N 25/34* (2006.01)
*A01P 1/00* (2006.01)

(21) Application number: **15802473.7**

(22) Date of filing: **04.06.2015**

(86) International application number:
**PCT/CL2015/050016**

(87) International publication number:
**WO 2015/184561 (10.12.2015 Gazette 2015/49)**

(54) **BIOCIDE FORMULATION ABLE TO PREVENT THE PROLIFERATION OF MICROORGANISMS ON SURFACES**

BIOZIDE FORMULIERUNG ZUR VERHINDERUNG DER PROLIFERATION VON MIKROORGANISMEN AUF OBERFLÄCHEN

FORMULATION BIOCIDE POUVANT EMPÊCHER LA PROLIFÉRATION DE MICRO-ORGANISMES SUR DES SURFACES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2014 CL 20141492**

(43) Date of publication of application:
**23.03.2016 Bulletin 2016/12**

(73) Proprietor: **Allué Nualart, Enrique Santiago (CL)**

(72) Inventor: **Allué Nualart, Enrique Santiago (CL)**

(74) Representative: **Elzaburu S.L.P.**
**Miguel Angel 21, 2nd floor**
**28010 Madrid (ES)**

(56) References cited:
EP-A1- 0 692 526    EP-A1- 2 647 680
WO-A1-2009/061165   WO-A2-2014/030123
WO-A2-2014/030123   CN-A- 101 195 719
CN-A- 103 589 212   US-B1- 6 280 846

- **CIOFFI, N. ET AL.: 'Copper nanoparticle/polymer composites with antifungal and bacteriostatic properties.' CHEM. MATER. vol. 17, no. 21, 2005, ISSN 0897-4756 pages 5255 - 5262, XP002498498**
- **BAGCHI, B. ET AL.: 'Antimicrobial efficacy and biocompability study of copper nanoparticle adsorbed mullite aggregates.' MATERIAL SCIENCE AND ENGINEERING C32 vol. 32, no. 7, 2012, ISSN 0928-4931 pages 1897 - 1905, XP028503977**

**Description**

FIELD OF APPLICATION

This invention provides a biocidal gelcoat formulation capable of eliminating and impeding the proliferation of a broad spectrum of pathogens on the surfaces where it is applied throughout the entire useful life of said surface.

This invention also provides a method for preparing said gelcoat formulation and the products derived from it.

The biocidal gelcoat formula is made with a fluid resin and copper nanoparticles and can be used in a wide range of applications.

The biocidal gelcoat formulation according to this invention is capable of controlling biological contamination, making it appropriate to use to coat intensively-used surfaces that are directly exposed to clinical biological contamination, maintaining its biocidal properties, for example, on vehicles such as ambulances, where it is capable of controlling different pathogenic microorganisms, such as bacteria, fungi and viruses.

BACKGROUND

In various industries, molded components have always been needed for different purposes, to make tools, containers, instruments, sports equipment, medical devices, building materials, parts for vehicles and watercrafts, etc.

These components are made with moldable materials, generally plastic. In certain cases, it is appropriate to use fiber-reinforced plastic or other materials or resins.

In addition to these materials, coatings are used to give the molded components additional properties. Formulas known as *gelcoats* are among the materials used to give a high-quality finish to the visible surface of a fiber-reinforced composite material.

*Gelcoats* are commonly based on a polyester resin combined with additives that give them specific properties in terms of viscosity, flow control, curing time, shine, adherence and more.

*Gelcoats* are applied to the mold when they are in the liquid state, after which they are cured to form crosslinked polymers, then, composite polymer matrices are added and often reinforced with fiberglass.

Once the component is manufactured, it is removed from the mold, leaving the gel coated surface exposed. The main objective behind using *gelcoats* is to give the component a lasting finish and to improve its aesthetic appearance, by giving it a colored, glossy surface that also provides mechanical resistance to scratches, ultraviolet degradation and hydrolysis.

Among the most well-known users of *gelcoats* are vehicle, marine vessel and aircraft manufacturers. *Gelcoats* can also be used to easily repair superficial damage, such as cracks and worn areas.

In numerous and diverse industrial activities, the use of new materials offers better uses and new applications and can make a company more competitive than its competitors or substitute products.

There are sectors, such as the transportation sector, where many of the technological advances are focused mainly on optimizing costs related to the type of material used and improvements in the resistance and weight of those materials, among other desirable properties, depending on the product to be transported.

For example, in the case of transporting liquids, it would be preferable to use light, resistant and impermeable containers that are resistant to corrosion and rust and make it possible to properly preserve the liquids. Therefore, you would choose between plastic, metal, etc., with or without temperature control and evaporation prevention, depending on the type of liquid to be transported.

In the case of transportation in general, whether you are transporting passengers, cargo and/or animals, there are other needs to consider, such as the optimization of space, the addition of new functionalities and equipment, temperature and humidity control, and others, that must be resolved in accordance with the requirements of the industry, the client or even the regulations of each territory.

For example, vehicles may need external surface coating that makes them resistant to use and certain environmental conditions and coated or molded components inside of them that give them functionality and optimize the use of space. These coatings can also be used for aesthetic purposes, in addition to the mechanical and/or functional purposes.

Within the patent documents, publication EP0692526, titled "Environmentally safe epoxy adhesive-copper hull coatings and coating methods" presents a coating for covering the hull of a marine vessel rendering it impermeable to water while also repelling marine organisms. It is comprised of a mixture of 20 to 30%, by volume, of an epoxy adhesive resin; a sufficient amount of hardener to harden said resin; 20 to 60%, by volume, of a marine organism repelling copper metal, in the form of dust or particles; and 5 to 30%, by volume, of a water insoluble thixotropic agent, where the covering maintains its form while curing through the operation of the thixotropic agent.

Furthermore, publication EP1411084, titled "Antibacterial composition for medical tool" describes an antibacterial composition to manufacture a disposable medical tool made of a vinyl chloride resin, which includes an acyclic organic phosphoric ester compound and a pyrithione compound, and a medical tool made of an antibacterial vinyl chloride resin that incorporates an antibacterial composition. Inorganic antibacterial and antifungal agents include metals capable of imparting antibacterial and/or antifungal properties, such as silver and copper, and their oxides, hydroxides, phosphates, thiosulfates, silicates and inorganic compounds that said metals or metal compounds carry. WO2014/030123 relates to polymeric materials with biocidal properties, where the polymeric material is preferably a polyolefin and comprises metallic copper nanoparticles or cupric oxide or cuprous oxide nanoparticles, or combinations thereof, which are treated prior to the incorporation to the polymeric resins and form secondary structures or aggregates inside the resin of 0.1 to 100 micrometers.

Based on the cited documents and the state of the art in general, it is clear that controlling microorganisms is a relevant problem, especially when there is exposure to an environment that has pathogenic microorganisms that are harmful to human beings.

This fact becomes even more important in cases where there are people who are less resistant to pathogens due to their diseases and for health workers who work in an environment with a high-risk of contagion and exposure to different and new pathogens. In this sense, interior environments equipped with air-recirculation systems create an environment that promotes the growth and permanence of microorganisms in these environments all year round, which reveal the need to provide a safer, more hygienic environment.

DEFINITIONS

Biocides are understood as those natural or synthetic agents used to destroy, neutralize, impede the action of or exercise another kind of control over any organism considered harmful to man. They can be physical agents (radiation, UV light, etc.), biological agents (enzymes, etc.) or organic or inorganic chemicals (chlorine dioxide, etc.)

DETAILED DESCRIPTION OF THE INVENTION

A first aspect of the present invention relates to a gelcoat composition with biocidal properties, wherein said composition comprises a resin fluid that is made up of polyester resins, cobalt, a thixotropic agent and copper nanoparticles.

In a preferred embodiment, said cobalt is cobalt octoate.

In a preferred embodiment, the resin fluid that is made up of polyester resins is a mixture of an unsaturated orthophthalic polyester resin and an unsaturated phthalic acid polyester resin.

In a preferred embodiment, the unsaturated orthophthalic polyester resin and the unsaturated phthalic acid polyester resin are in a 4:1 proportion.

In a preferred embodiment, the composition further contains titanium dioxide.

In a preferred embodiment, the copper nanoparticles are between 4 and 8 nm.

A second aspect of the present invention relates to a process for preparing a gelcoat composition with biocidal properties of the first aspect, wherein said process includes the following stages:

    a. mixing polyester resins and cobalt until achieving a homogeneous mixture;
    b. adding copper nanoparticles;
    c. mixing the copper nanoparticles with the polyester resin mixture of stage (a);
    d. adding the titanium dioxide;
    e. mixing for 5 minutes;
    f. adding a thixotropic agent;
    g. mixing until obtaining a homogeneous composition.

In a preferred embodiment, the polyester resins and the cobalt are mixed for 60 minutes in stage (a).

In a preferred embodiment, a fraction of the premixture from stage (a) is separated and copper nanoparticles added to it before they are added in stage (b). In a preferred embodiment, the mixture is left to sit for 48 hours.

In a preferred embodiment, the polyester resin mixture and copper nanoparticles are agitated for 45 to 50 minutes to achieve a homogeneous composition in stage (c).

In a third aspect, the present invention relates to the use of the gelcoat composition of the first aspect, for coating a surface of a fiberglass-reinforced composite material, wherein said surface is exposed directly to pathogenic organisms of human and/or animal origin.

In a preferred embodiment, said surface is in a vehicle. Preferably, the vehicle is an ambulance.

In a preferred embodiment, a catalyzer is added for curing the coating composition. Preferably, the catalyzer is added in an amount of 10 g/kg of the coating composition.

In a preferred embodiment, the thickness of the coating composition is between 0.5 and 0.7 mm.

TECHNICAL PROBLEM

*Gelcoat* materials have been used for approximately 50 years, and although different chemical compounds have been added to them, up to this point, the main functions of these coatings are aesthetic and mechanical, such as resistance to torsion, pressure, UV light, temperature and humidity, without considering other additional properties based on the use the coated components will be given.

Currently, there are various formulations for industrial and/or domestic use, aimed at preventing the adherence of algae and microorganisms in the case of marine vessels, as well as paints with synthetic chemical agents with short-term effectiveness, of 24 months, that make it possible to control a limited spectrum of organisms, be they fungi or bacteria.

Consequently, there is a need for materials that provide broad-spectrum action (biocide) over the long term, preferably throughout the useful life of the product, without raising the cost of production or of the supplies used, and that make it possible to maintain the mechanical and aesthetic properties of the molded elements, without requiring the use of agents and/or compositions to disinfect and protect the surfaces.

TECHNICAL SOLUTION

This invention provides a gelcoat material with biocidal properties resulting from the incorporation of copper nanoparticles with a capacity to eliminate 99% of all bacteria, germs, viruses and fungi in a period of 24 hours. It is even feasible for pathogenic organisms to be eliminated in a shorter amount of time by increasing the quantity of copper nanoparticles in the mixture.

The gelcoat according to this invention maintains its biocidal action throughout the useful life of the coated article, that is, for a period of at least 8 years.

The biocidal gelcoat according to this invention is comprised of resins, has the appearance of a gel and is used as a coating to give a high-quality finish to the visible surface of a fiberglass-reinforced composite material.

Biocides (as defined previously) are intended to destroy and control different types of pathogenic agents considered harmful to man and should preferably have a broad spectrum of activity, that is, they should cover a wide range of microorganisms, be they bacteria, viruses or fungi. Other desirable characteristics of biocidal agents are that they be effective at low concentrations and over a wide pH range, that they be highly persistent and, especially, that they have a low toxicity in humans.

The gelcoat according to this invention incorporates copper nanoparticles; these particles have a regular size of 4 to 8 nm and are characterized by a production process that does not refine or contaminate the copper metal but rather reproduces the chemical characteristics of "HG" copper (Grade A Cathode) with a purity of 99.997%.

The copper nanoparticles also meet the indicated requirements, presenting a surprisingly high persistence in resin-based compositions, given that they are nanoparticles, while also ensuring harmlessness in humans. In addition, the use of nanocopper allows the gelcoat to maintain its physical and chemical characteristics, without affecting the mechanical and aesthetic properties of the composition once applied on surfaces.

The biocidal gelcoat can be used to manufacture all kinds of components, preferably to coat the interiors of all kinds of vehicles, particularly ambulances, where the lateral walls, ceiling and interior cabinets used to store medical supplies are coated and where molded components are manufactured in accordance with the design of every vehicle.

TECHNICAL ADVANTAGES

The exact combination of the different components that the biocidal gelcoat mixture contains according to this invention has been tested under different environmental conditions, with different prevailing temperatures of between 15 to 20 degrees Celsius, and the application of this mixture reduced the reprocessing of obtained components by 60%. In other words, when the mixture does not achieve adequate homogenization and viscosity during the resin-curing process, it loses adhesion on the vertical parts, drips and loses the perfect texture it should have upon removing the component from its mold. This problem is resolved by this invention, so that once the biocidal gelcoat is applied, it remains uniform on the surface of the molded component, preserving the homogeneity of its biocidal properties.

Although one of the virtues of fiberglass-reinforced plastic is that it is easily repairable, when it comes to medium-scale production processes, reprocessing reduces the efficiency of the mold.

This capacity of the biocidal gelcoat according to this invention is achieved by using a certain mixture that does currently exist in the industry.

This invention provides a biocidal gelcoat formulation capable of controlling, eliminating and/or impeding the proliferation of a wide spectrum of pathogenic organisms on the surfaces where it is applied.

This invention also provides a method for preparing the gelcoat formulation and the products derived from it.

In particular, the biocidal gelcoat according to this invention includes a resin fluid and copper nanoparticles, the regular size of which is preferably between 4 and 8 nm.

The biocidal gelcoat formulation according to this invention is used to coat surfaces exposed directly to clinical biological contamination, for example, in vehicles such as ambulances, where it is capable of controlling bacteria, fungi and viruses.

The process is divided into two stages. In the first stage, the base mixture of resins is produced; this accounts for between 80% to 90% of the total mixture. In the second stage, other chemicals are added to give the mixture the characteristics needed to improve the performance of the material, such as flexibility, color resistance, viscosity and curing speed.

In this invention, the copper nanoparticles are added in between the first and second stage of the biocidal gelcoat manufacturing process.

1. First Stage:

Ingredients needed for every kilogram of biocidal gelcoat:

- 800 g of common polyester resin

- 200 g of flexible polyester resin

- 1 g of resin accelerator

In one preparation of the invention, the common polyester resin corresponds to an unsaturated orthophthalic polyester resin and the flexible polyester resin corresponds to an unsaturated phthalic acid polyester resin. The resin accelerator corresponds to cobalt, preferably using cobalt octoate 12%.

Procedure:

The ingredients indicated above are mixed in a tank with an agitator for 60 minutes. This mixture corresponds to the base of the resin for the gelcoat.

Once the mixture is obtained, a fraction of the resin and cobalt mixture is moved to another container or conditioning tank, where the copper nanoparticles are added in the amount of 10 to 30 g per kg of finished product, preferably 30 g/kg (equivalent to a final proportion of 3%). The nanoparticles are added, stirring constantly, and the mixture is left to sit for approximately 48 hours, thereby allowing the resin to combine with the nanoparticles and resulting in a more homogeneous mixture of components.

2. Second Stage:

Ingredients needed for every kilogram of biocidal gelcoat:

- Coloring, preferably titanium dioxide
- A sufficient amount of thixotropic agent
- A sufficient amount of catalyzer

Procedure:

Taking the main container that contains the resin mixture, and with the agitator activated to continue the mixing process, the conditioning solution containing the copper nanoparticles that was obtained in the first stage of the process is added. Then the titanium dioxide is added and, after 5 minutes, the thixotropic agent is added. It is left in the agitator machine for another 45 to 50 minutes and/or until achieving a homogeneous mixture.

Additionally and/or optionally, other additives, such as colorants or UV filters, can be added to improve the technical and aesthetic properties of the gelcoat without reducing or lessening the biocidal activity of the product.

In order for the gelcoat to cure on the surface of the mold, catalyzer is added at the moment the mixture is applied to the molds, after which the mixture cures in a period of between 20 and 40 minutes.

This biocidal gelcoat mixture, thus finished and applied to the molds, then goes on to the following stages of the preparation of fiberglass products, maintaining its biocidal properties in spite of the high temperatures of the resins added in later stages of the process of manufacturing molded components.

In one preparation of the invention, the minimum and maximum thickness of the biocidal gelcoat was between 0.5 and 0.7 mm, preferably 0.6 mm.

Following preliminary tests to determine biocidal activity, more detailed analyses were conducted to compare samples of the finished product, using 0% copper content as a control and 3% as a sample of the biocidal gelcoat itself, as shown below.

<u>Quantitative determination of the biocidal activity of the product through the recount of viable cells.</u>

The following protocol was used to quantitatively determine the biocidal activity of the product:

1. The test strains (*Staphylococcus aureus ATCC25929.Enterococcus faecalis* ATCC 29212, *Staphylococcus epidermidis* ATCC 12228, *Escherichia coli* ATCC25922, *Pseudomonas aeruginosa* PAO1 *y Salmonella enteritidis* ATCC13076) were grown on blood agar and incubated at 37 °C for 24 hours.

2. Using fresh colonies from this culture, an inoculum of 3 mL of Mueller Hinton broth was prepared and incubated until reaching an optical density equivalent to $10^5$ bacteria/mL. This culture was diluted 10 times in saline solution.

3. 100 $\mu$L of the diluted culture was applied to a 0.5 x 1.0 cm piece of the sample to be analyzed, in a sterile tube. To control for bacterial growth, 100 $\mu$L of the diluted culture was deposited in an empty sterile tube.

4. The sample and the control were incubated at 37 °C for 24 h.

5. Subsequently, 1 mL of nutritive medium was added to each tube, mixed and agitated to resuspend the bacteria that had adhered to the sample and the control.

6. Then 100 $\mu$L of the supernatant were taken and a 10-fold serial dilution was made to conduct a count of viable cells through streaking on plates of nutritive agar.

7. The analysis was run three times and was repeated two times, independently, for the statistical analysis of the samples.

In order to determine the antibacterial activity of the sample (R), the number of viable cells was estimated by determining the colony forming units per unit volume (CFU/mL). A base 10 logarithm was applied to this value to calculate the Ut and At parameters that correspond to the logarithm of the number of bacteria recovered in the control and in the sample, respectively.

Then, the following formula was used to calculate the antibacterial activity of the sample (R):

$$R = U_t - A_t$$

Growth-inhibition efficiency (%E) was also measured as a percentage using the following formula:

$$\%E = \frac{(Nc - Nm)}{Nc} \times 100$$

Where $N_c$ is the average number of bacteria recovered in the control after 24 h of incubation and $N_m$ is the average number of bacteria recovered in the sample after 24 h of incubation.

<u>**Comparative Example A:**</u>

Table 1. Result of the analysis of antibacterial activity through the recount of viable cells in the 0% sample

| Bacteria | S. aureus | E. faecalis | S. epiderm | E. coli | P. aerugino | S. enteritidis |
|---|---|---|---|---|---|---|
| Average recount of bacteria recovered from the control (Nc) | $3.01 \times 10^{16}$ CFU/mL | $4.07 \times 10^{16}$ CFU/mL | $3.72 \times 10^{16}$ CFU/mL | $3.65 \times 10^{16}$ CFU/mL | $3.18 \times 10^{16}$ CFU/mL | $2.85 \times 10^{16}$ CFU/mL |
| Average recount of bacteria recovered in the analyzed sample (Nm) | $2.70 \times 10^{16}$ CFU/mL | $3.23 \times 10^{16}$ CFU/mL | $2.87 \times 10^{16}$ CFU/mL | $2.52 \times 10^{16}$ CFU/mL | $3.16 \times 10^{16}$ CFU/mL | $3.31 \times 10^{16}$ CFU/mL |
| logarithm of the number of bacteria recovered in the control ($U_t$) | 16.48 | 15.61 | 16.57 | 16.56 | 15.50 | 16.45 |
| logarithm of the number of bacteria recovered in the sample ($A_t$) | 16.43 | 16.51 | 16.46 | 16.40 | 16.50 | 16.52 |
| **Antibacterial activity of the sample (R)** | **0.05** | **0.10** | **0.11** | **0.16** | **0** | **0** |
| **Percentage of growth-inhibition efficiency (%E)** | **10.05** | **20.49** | **22.87** | **31.05** | **0.52** | **0** |
| Sterilization method | UV light | | | | | |
| Incubation time | 24 hours | | | | | |

**Example B:**

Table 2. Result of the analysis of antibacterial activity through the recount of viable cells in the 3% sample

| Bacteria | *S. aureus* | *E. faecalis* | *S. epiderm* | *E. coli* | *P. aerugino* | *S. enteritidis* |
|---|---|---|---|---|---|---|
| Average recount of bacteria recovered from the control (Nc) | $3.01 \times 10^{16}$ CFU/mL | $4.07 \times 10^{16}$ CFU/mL | $3.72 \times 10^{16}$ CFU/mL | $3.65 \times 10^{16}$ CFU/mL | $3.18 \times 10^{16}$ CFU/mL | $2.85 \times 10^{16}$ CFU/mL |
| Average recount of bacteria recovered in the analyzed sample (Nm) | $1.08 \times 10^{15}$ CFU/mL | $1.08 \times 10^{15}$ CFU/mL | $3.63 \times 10^{15}$ CFU/mL | $1.57 \times 10^{15}$ CFU/mL | $2.62 \times 10^{15}$ CFU/mL | $1.73 \times 10^{15}$ CFU/mL |
| logarithm of the number of bacteria recovered in the control ($U_t$) | 16.48 | 15.61 | 16.57 | 16.56 | 15.50 | 16.45 |
| logarithm of the number of bacteria recovered in the sample ($A_t$) | 15.03 | 15.03 | 15.56 | 15.19 | 15.42 | 15.24 |
| **Antibacterial activity of the sample (R)** | **1.44** | **1.57** | **1.56** | **1.37** | **1.09** | **1.22** |
| **Percentage of growth-inhibition efficiency (%E)** | **96.41** | **97.34** | **90.22** | **95.71** | **91.78** | **93.92** |
| Sterilization method | UV light | | | | | |
| Incubation time | 24 hours | | | | | |

Conclusions of the analysis of biocidal activity

The contact trial on antibacterial activity through the recount of viable cells demonstrated that the 0% sample (from comparative example A) is not capable of reducing the number of bacteria in the trial strains (*Staphylococcus aureus ATCC25929.Enterococcus faecalis* ATCC 29212, *Staphylococcus epidermidis* ATCC 12228, *Escherichia coli* ATCC25922, *Pseudomonas aeruginosa* PAO1 *and Salmonella enteritidis* ATCC13076) after 24 hours of contact.

In contrast, the same analysis demonstrated that the 3% sample (from example B) decreased by an order of magnitude the number of bacteria from the trial strains (*Staphylococcus aureus* ATCC25929, *Enterococcus faecalis* ATCC 29212, *Staphylococcus epidermidis* ATCC 12228, *Escherichia coli* ATCC25922, *Pseudomonas aeruginosa* PAO1 *and Salmonella enteritidis* ATCC13076). This is reflected in the R value calculated for antibacterial activity, obtaining sample values greater than 1 for the action against the different bacteria and with growth-inhibition efficiency percentages (%E) greater than 90%

EXAMPLES

Example 1: Preparation of gelcoat

1. First Stage:

- 800 g of common unsaturated orthophthalic polyester
- 200 g of flexible polyester resin
- 1 g of cobalt octoate

The 3 ingredients are mixed in a container for 60 minutes.

Once the mixture is obtained, 300 g are separated out to another container where 30 g of copper nanoparticles are added. The mixture is agitated manually and is left to sit for approximately 48 hours, achieving a mixture that fully incorporates the copper nanoparticles.

2. Second Stage:

- 100 titanium dioxide
- 21 g of thixotropic agent
- 10 g of catalyzer

The 300 g of resins containing the nanoparticles are added back to the base mixture of resins obtained in the first stage of the process. Then, the titanium dioxide is added and after mixing for 5 minutes, the thixotropic agent is added, continuing the agitation for 45 minutes until achieving a homogeneous mixture.

At this point, there is a mixture of resins, which cannot be applied to the molds until catalyzer is added in the amount of 10 g/kg. The catalyzer is to be added at the moment the mixture is to be applied to the molds, after which a chemical reaction begins, allowing the mixture to harden in a period of between 20 and 40 minutes.

This finished biocidal gelcoat mixture is applied to the mold, which later goes on to the remaining phases involved in the preparation of fiberglass products, maintaining its biocidal properties.

Example 2: Preliminary characterization of the biocidal properties of the material.

1. Analysis of a biocidal gelcoat sample at 1%

METHOD OF ANALYSIS

| | |
|---|---|
| Technique used: | ISO 22196 of 2007. |
| Sample size: | 500 mm$^2$. |
| Initial load: | 1 - 1.5 x 10$^5$. |
| Contact time: | 24 hours. |

MICROORGANISM(S) EVALUATED: Escherichia coli (ATCC 25922)

| Sample | | Control | | Reduction (%) |
|---|---|---|---|---|
| 1% biocidal *gelcoat* | | *Gelcoat* | | |
| Average count | CFU/mL | Average count | CFU/mL | |
| $1.10 \times 10^1$ | $5.52 \times 10^1$ | $11.75 \times 10^1$ | $58.75 \times 10^1$ | 90.6 |

**Claims**

1. Gelcoat composition with biocidal properties, wherein said composition comprises a resin fluid that is made up of polyester resins, cobalt, a thixotropic agent and copper nanoparticles.

2. Gelcoat composition according to claim 1, wherein said cobalt is cobalt octoate.

3. Gelcoat composition according to any of claims 1 or 2, wherein the resin fluid that is made up of polyester resins is a mixture of an unsaturated orthophthalic polyester resin and an unsaturated phthalic acid polyester resin.

4. Gelcoat composition according to claim 3, wherein the unsaturated orthophthalic polyester resin and the unsaturated phthalic acid polyester resin are in a 4:1 proportion.

5. Gelcoat composition according to claim 1, further containing titanium dioxide.

6. Gelcoat composition according to any of claims 1 to 5, wherein the copper nanoparticles are between 4 and 8 nm.

7. Process for preparing a gelcoat composition with biocidal properties according to claims 1 to 6, wherein said process includes the following stages:

   a. mixing polyester resins and cobalt until achieving a homogeneous mixture;
   b. adding copper nanoparticles;
   c. mixing the copper nanoparticles with the polyester resin mixture of stage (a);
   d. adding the titanium dioxide;
   e. mixing for 5 minutes;
   f. adding a thixotropic agent;
   g. mixing until obtaining a homogeneous composition.

8. Process according to claim 7, wherein the polyester resins and the cobalt are mixed for 60 minutes in stage (a).

9. Process according to any of claims 7 or 8, wherein a fraction of the premixture from stage (a) is separated and copper nanoparticles added to it before they are added in stage (b).

10. Process according to any of claims 7 to 9, wherein the mixture is left to sit for 48 hours.

11. Process according to any of claims 7 to 10, wherein the polyester resin mixture and copper nanoparticles are agitated for 45 to 50 minutes to achieve a homogeneous composition in stage (c).

12. Use of a gelcoat composition according to any of claims 1 to 6, for coating a surface of a fiberglass-reinforced composite material, wherein said surface is exposed directly to pathogenic organisms of human and/or animal origin.

13. Use according to claim 12, wherein said surface is in a vehicle.

14. Use according to claim 13, wherein the vehicle is an ambulance.

15. Use according to any one of claims 13 or 14, wherein a catalyzer is added for curing the coating composition.

16. Use according to claim 15, wherein the catalyzer is added in an amount of 10 g/kg of the coating composition.

17. Use according to any one of claims 13 to 16, wherein the thickness of the coating composition is between 0.5 and 0.7 mm.

**Patentansprüche**

1. Gelcoat-Zusammensetzung mit bioziden Eigenschaften, wobei diese Zusammensetzung eine Harzflüssigkeit umfasst, die aus Polyesterharzen, Kobalt, einem thixotropen Mittel und Kupfernanopartikeln besteht.

2. Gelcoat-Zusammensetzung nach Anspruch 1, wobei dieses Kobalt Kobalt-Oktoat ist.

3. Gelcoat-Zusammensetzung nach einem der Ansprüche 1 oder 2, wobei die Harzflüssigkeit, die aus Polyesterharzen besteht, eine Mischung aus einem ungesättigten Orthophthal-Polyesterharz und einem ungesättigten Phthalsäure-Polyesterharz ist.

4. Gelcoat-Zusammensetzung nach Anspruch 3, wobei das ungesättigte Orthophthal-Polyesterharz und das ungesättigte Phthalsäure-Polyesterharz in einem Verhältnis von 4:1 vorliegen.

5. Gelcoat-Zusammensetzung nach Anspruch 1, die ferner Titandioxid beinhaltet.

6. Gelcoat-Zusammensetzung nach einem der Ansprüche 1 bis 5, wobei die Kupfernanopartikel zwischen 4 und 8 nm liegen.

7. Verfahren zur Herstellung einer Gelcoat-Zusammensetzung mit bioziden Eigenschaften nach den Ansprüchen 1 bis 6, wobei dieses Verfahren die folgenden Stufen umfasst:

   a. Mischen von Polyesterharzen und Kobalt, bis eine homogene Mischung entsteht;
   b. Hinzufügen von Kupfernanopartikeln;
   c. Mischen der Kupfernanopartikel mit der Polyesterharzmischung der Stufe (a);
   d. Hinzufügen des Titandioxids;
   e. Mischen während 5 Minuten;
   f. Hinzufügen eines thixotropen Mittels;
   g. Mischen bis Erhalt einer homogenen Zusammensetzung.

8. Verfahren nach Anspruch 7, wobei die Polyesterharze und das Kobalt in Stufe (a) 60 Minuten lang gemischt werden.

9. Verfahren nach einem der Ansprüche 7 oder 8, wobei eine Fraktion der Vormischung aus Stufe (a) getrennt wird und dieser Kupfernanopartikel hinzugefügt werden, bevor sie in Stufe (b) hinzugefügt werden.

10. Verfahren nach einem der Ansprüche 7 bis 9, wobei die Mischung 48 Stunden ruhen gelassen wird.

11. Verfahren nach einem der Ansprüche 7 bis 10, wobei die Polyesterharzmischung und Kupfernanopartikel 45 bis 50 Minuten gerührt werden, um in Stufe (c) eine homogene Zusammensetzung zu erzielen.

12. Verwendung einer Gelcoat-Zusammensetzung nach einem der Ansprüche 1 bis 6 zum Beschichten einer Oberfläche eines glasfaserverstärkten Verbundmaterials, wobei diese Oberfläche direkt pathogenen Organismen menschlichen und/oder tierischen Ursprungs ausgesetzt wird.

13. Verwendung nach Anspruch 12, wobei sich diese Oberfläche in einem Fahrzeug befindet.

14. Verwendung nach Anspruch 13, wobei das Fahrzeug ein Krankenwagen ist.

15. Verwendung nach einem der Ansprüche 13 oder 14, wobei ein Katalysator zum Härten der Beschichtungszusammensetzung hinzugefügt wird.

16. Verwendung nach Anspruch 15, wobei der Katalysator in einer Menge von 10 g/kg der Beschichtungszusammensetzung hinzugefügt wird.

17. Verwendung nach einem der Ansprüche 13 bis 16, wobei die Dicke der Beschichtungszusammensetzung zwischen 0,5 und 0,7 mm liegt.

**Revendications**

1. Composition d'enduit gélifié aux propriétés biocides, dans laquelle ladite composition comprend un liquide résineux qui est composé de résines de polyester, de cobalt, d'un agent thixotropique et de nanoparticules de cuivre.

2. Composition d'enduit gélifié selon la revendication 1, dans laquelle ledit cobalt est de l'octoate de cobalt.

3. Composition d'enduit gélifié selon l'une des revendications 1 ou 2, dans laquelle le liquide résineux qui est composé de résines de polyester est un mélange d'une résine de polyester insaturé orthophtalique et d'une résine de polyester insaturé d'acide phtalique.

4. Composition d'enduit gélifié selon la revendication 3, dans laquelle la résine de polyester insaturé orthophtalique et la résine de polyester insaturé d'acide phtalique sont présentes dans une proportion de 4:1.

5. Composition d'enduit gélifié selon la revendication 1, contenant en outre du dioxyde de titane.

6. Composition d'enduit gélifié selon l'une des revendications 1 à 5, dans laquelle les nanoparticules de cuivre mesurent entre 4 et 8 nm.

7. Procédure de préparation d'une composition d'enduit gélifié aux propriétés biocides selon les revendications 1 à 6, dans laquelle ladite procédure comprend les étapes suivantes :

    a. mélanger des résines de polyester et du cobalt jusqu'à l'obtention d'un mélange homogène ;
    b. ajouter des nanoparticules de cuivre ;
    c. mélanger les nanoparticules de cuivre avec le mélange de résines de polyester de l'étape (a) ;
    d. ajouter le dioxyde de titane ;
    e. mélanger pendant 5 minutes ;
    f. ajouter un agent thixotropique ;
    g. mélanger jusqu'à l'obtention d'une composition homogène.

8. Procédure selon la revendication 7, dans laquelle les résines de polyester et le cobalt sont mélangés pendant 60 minutes dans l'étape (a).

9. Procédure selon l'une des revendications 7 ou 8, dans laquelle une fraction du pré-mélange de l'étape (a) est séparée et des nanoparticules de cuivre y sont ajoutées avant d'être ajoutées dans l'étape (b).

10. Procédure selon l'une des revendications 7 à 9, dans laquelle on laisse reposer le mélange pendant 48 heures.

11. Procédure selon l'une des revendications 7 à 10, dans laquelle le mélange de résines de polyester et les nanoparticules de cuivre sont agités pendant 45 à 50 minutes pour obtenir une composition homogène dans l'étape (c).

12. Utilisation d'une composition d'enduit gélifié selon l'une des revendications 1 à 6, pour enduire une surface d'un matériau composite renforcé de fibres de verre, dans laquelle ladite surface est directement exposée à des organismes pathogènes d'origine humaine et/ou animale.

13. Utilisation selon la revendication 12, dans laquelle ladite surface se trouve sur un véhicule.

14. Utilisation selon la revendication 13, dans laquelle le véhicule est une ambulance.

15. Utilisation selon l'une des revendications 13 ou 14, dans laquelle un catalyseur est ajouté pour sécher la composition d'enduction.

16. Utilisation selon la revendication 15, dans laquelle le catalyseur est ajouté à hauteur de 10 g/kg de la composition d'enduction.

**17.** Utilisation selon l'une des revendications 13 à 16, dans laquelle l'épaisseur de la composition d'enduction est comprise entre 0,5 et 0,7 mm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0692526 A
- EP 1411084 A

- WO 2014030123 A